# EUROPÄISCHE PATENTANMELDUNG

(11) **EP 1 298 519 A2**
(43) Veröffentlichungstag der Anmeldung: **02.04.2003**
(21) Anmeldenummer: 02019331.4
(22) Anmeldetag: 28.08.2002
(51) Int. Cl.: G06F 1/16

(54) **Tragbarer Computer**

(30) Priorität: 27.09.2001 DE 10147790
(71) Anmelder: Fujitsu Siemens Computers GmbH, 81739 München (DE)
(72) Erfinder: Köhn, Immanuel, 86179 Augsburg (DE)
(74) Vertreter: Epping Hermann & Fischer

(57) **Zusammenfassung**

Die Erfindung betrifft einen tragbaren Computer mit einem Gehäuse (1) mit zwei nebeneinander angeordneten Einschubplätzen (8, 9) zur Aufnahme von jeweils einem Einschubmodul (2, 3), wobei die Einschubmodule (2, 3) mittels einer Verriegelung in einer Einschubposition gehalten werden können und zur Entnahme der Einschubmodule (2, 3) die Verriegelung lösbar ist. Erfindungsgemäß ist eine Verriegelungsvorrichtung (13) vorgesehen, die zur Verriegelung auf beide Einschubplätze (8, 9) einwirkt und die zur Entriegelung durch einen gemeinsamen Betätiger auf den einen oder den anderen Einschubplatz (8, 9) einwirken kann.

## Beschreibung

Die Erfindung betrifft einen tragbaren Computer mit einem Gehäuse mit zwei nebeneinander angeordneten Einschubplätzen zur Aufnahme von jeweils einem Einschubmodul, wobei die Einschubmodule mittels einer Verriegelung in einer Einschubposition gehalten werden können und zur Entnahme der Einschubmodule die Verriegelung lösbar ist.

Bei tragbaren Computern sind oftmals Komponenten über Einschubmodule realisiert, so daß sie austauschbar sind. Solche Module können beispielsweise Festplatten, Diskettenlaufwerke, CD-Laufwerke oder spezielle Schnittstellenkarten sein. Die Einschubplätze sind in der Regel so ausgebaut, daß nach dem Einführen eines Einschubmoduls dieses in der Einschubposition verrastet. Durch einen speziellen Mechanismus kann die Verrastung gelöst werden, wenn das Einschubmodul wieder entnommen werden soll.

Aufgrund der sehr beschränkten Platzsituation bei tragbaren Computern und dem Bestreben, die Gehäuse immer weiter zu verkleinern oder mehr Komponenten vorzusehen, bereitet es in vielen Fällen Probleme, eine Position für die Betätiger der Entriegelungsvorrichtungen zu finden oder aber die Betätiger müssen so klein gestaltet werden, daß sie nicht mehr gut zu bedienen sind.

Aufgabe der Erfindung ist es daher, bei tragbaren Computern, in deren Gehäuse zwei Einschubplätze nebeneinander angeordnet sind, eine platzsparende Ver- und Entriegelung der Einschubmodule zu ermöglichen.

Diese Aufgabe wird durch einen tragbaren Computer der eingangs genannten Art gelöst, der dadurch gekennzeichnet ist, daß eine Verriegelungsvorrichtung vorgesehen ist, die zur Verriegelung auf beide Einschubplätze einwirkt und die zur Entriegelung durch einen gemeinsamen Betätiger auf den einen oder den anderen Einschubplatz einwirken kann.

Der Vorteil der erfindungsgemäßen Anordnung besteht darin, daß für zwei Einschubplätze eine einzige Verriegelungsvorrichtung, das heißt vor allem nur ein einziger Betätiger auf der Seite des Gehäuses genügt, um die Entriegelung von Einschubmodulen zu bewirken. Somit reduziert sich der Platzbedarf für die Entriegelungsvorrichtung der Einschubplätze.

In einer vorteilhaften Ausgestaltung der Erfindung ist ein Schieber vorgesehen, dessen äußere Enden in die Einschubplätze hineinragen und dort zur Verrastung mit Ausnehmungen der Einschubmodule zusammenwirken. Mit diesem einen Schieber werden somit beide Einschubmodule in der Einschubposition gehalten. Durch die Bewegung des Schiebers in die eine oder andere Richtung wird die Verrastung des einen oder des anderen Einschubmoduls gelöst. Dazu ist erforderlich, daß die Ausnehmungen in den Einschubmodulen tiefer sind als die in die Einschubplätze ragenden Endabschnitte des Schiebers.

Die Erfindung wird nachfolgend anhand eines Ausführungsbeispieles näher erläutert. Es zeigt:
- Figur 1: einen tragbaren Computer in einer schematischen Darstellung mit der Anordnung von Einschubplätzen,
- Figur 2: ein erstes Ausführungsbeispiel einer Verriegelungsvorrichtung nach der Erfindung,
- Figur 3: ein zweites Ausführungsbeispiel einer Verriegelungsvorrichtung nach der Erfindung und
- Figur 4: eine Abwandlung des Ausführungsbeispiels von Figur 2.

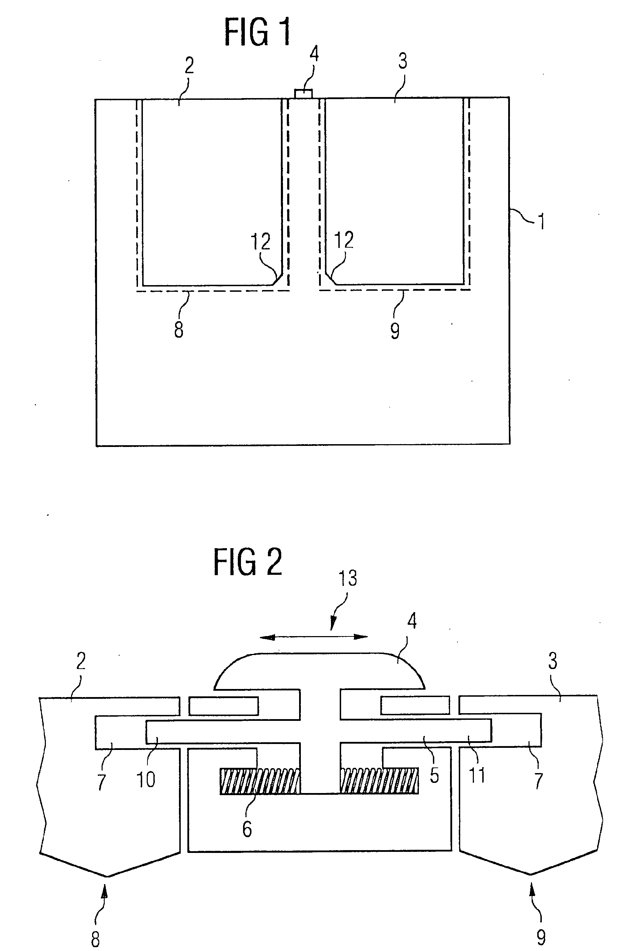

In der Figur 1 ist eine Draufsicht auf einen tragbaren Computer gezeigt. Im Inneren des tragbaren Computers sind zwei Einschubplätze 8 und 9 vorgesehen, in die Einschubmodule 2 und 3 eingesteckt werden können. Im Ausführungsbeispiel soll eine Bedienung der Verriegelung von der Frontseite des Gehäuses, in der Darstellung der Figur 1 also von oben her, erfolgen.

In der Figur 2 ist eine erfindungsgemäße Verriegelungsvorrichtung gezeigt, durch die die Einschubmodule 2 und 3 in einer Einschubposition in den Einschubplätzen 8 und 9 verriegelt und auch wieder entriegelt werden können. Dazu ist ein Schieber 5 vorgesehen, der in die Bereiche der beiden Einschubplätze 8 und 9 hineinragt. Der Schieber 5 ist durch eine Feder 6 in einer mittigen Position gehalten, die damit die Ruheposition darstellt. Außerdem ist der Schieber mit einem Betätigungsknopf 4 verbunden, der außerhalb des Gehäuses liegt und somit für einen Benutzer zugänglich ist. Durch den Betätigungsknopf 4 kann der Schieber senkrecht zur Einsteckrichtung der Einschubmodule 2 und 3 bewegt werden.

Die Funktionsweise wird im folgenden anhand des Einsteckens des Einschubmoduls 2 in den Einschubplatz 8 beschrieben.

Beim Einschieben des Einschubmoduls 2 kommt dieses zuerst mit einer Anschrägung 12 mit einem äußeren Endabschnitt 10 des Schiebers 5 in Kontakt. Durch das weitere Ausüben einer Kraft in Einsteckrichtung wird der Schieber 5 zurückgeschoben, so daß das Einsteckmodul 2 vollständig in den Einschubplatz 8 eingeführt werden kann. In der Einschubposition ist das Einschubmodul 2 vollständig in dem Einschubplatz 8 aufgenommen. Auf Höhe des Schiebers 5 befindet sich nun eine Ausnehmung 7 in dem Einschubmodul 2. Aufgrund der Rückstellwirkung der Feder 6 gleitet der Schieber 5 wieder in seine mittige Ruheposition, wobei sich der Endabschnitt 10 des Schiebers in die Ausnehmung 7 des Einschubmoduls 2 erstreckt, so daß das Einschubmodul 2 in dieser Position gehalten ist und nicht wieder entnommen werden kann.

Das andere Einschubmodul 3 und der andere äußere Endabschnitt 11 des Schiebers 5 sind in gleicher Weise gestaltet. Also würde auch beim Einstecken des zweiten Einschubmoduls 3 eine Anschrägung 12 eine Kraft auf den Schieber 5 ausüben. Damit der Schieber sich nun in die entsprechende Richtung bewegen kann, ist notwendig, daß die Ausnehmung 7 des ersten Einschubmoduls 2 tiefer ist als der in das erste Einschubmodul 2 eingreifende Endabschnitt 10. Nur dann kann der Schieber 5 soweit in die andere Richtung bewegt werden, daß das zweite Einschubmodul 3 ungehindert eingesteckt werden kann. In der Einschubposition wird auch das Einschubmodul 3 durch den Schieber 5 in dieser Position gehalten, ist also verriegelt. Dies ist die Betriebsituation, die die Figur 2 zeigt.

Schiebt man nun den Betätigungsknopf 4 nach rechts, gibt er das linke Modul frei, indem der Endabschnitt 10 des Schiebers 5, der in die Ausnehmung 7 des linken Einschubmoduls 2 ragt, aus der Ausnehmung 7 herausfährt. Dabei fährt auf der rechten Seite der zweite Endabschnitt 11 des Schiebers 5 tiefer in das rechte Modul 3. Schiebt man den Betätigungsknopf 4 nach links, gibt er das rechte Modul frei, indem der Endabschnitt 11 des Schiebers 5, der in eine Ausnehmung 7 des rechten Moduls 3 ragt, aus dem Modul 3 herausfährt. Dabei fährt auf der linken Seite der Endabschnitt 10 des Schiebers 5 tiefer in das linke Modul 2.

Somit steht für beide Einschubmodule 2 und 3 sowohl ein Verriegelungs- als auch ein Entrieglungsmechanismus zur Verfügung, ohne daß dafür zwei Betätigungsknöpfe eingesetzt werden müssen. Die zur Ver- und Entriegelung der Einschubmodule 2 und 3 vorgeschlagene Verriegelungsvorrichtung ist somit einfacher als das Vorsehen von zwei solcher Vorrichtungen wie beim Stand der Technik, was einerseits zur Kostenersparnis als auch zur Platzersparnis an der Gehäuseoberfläche führt.

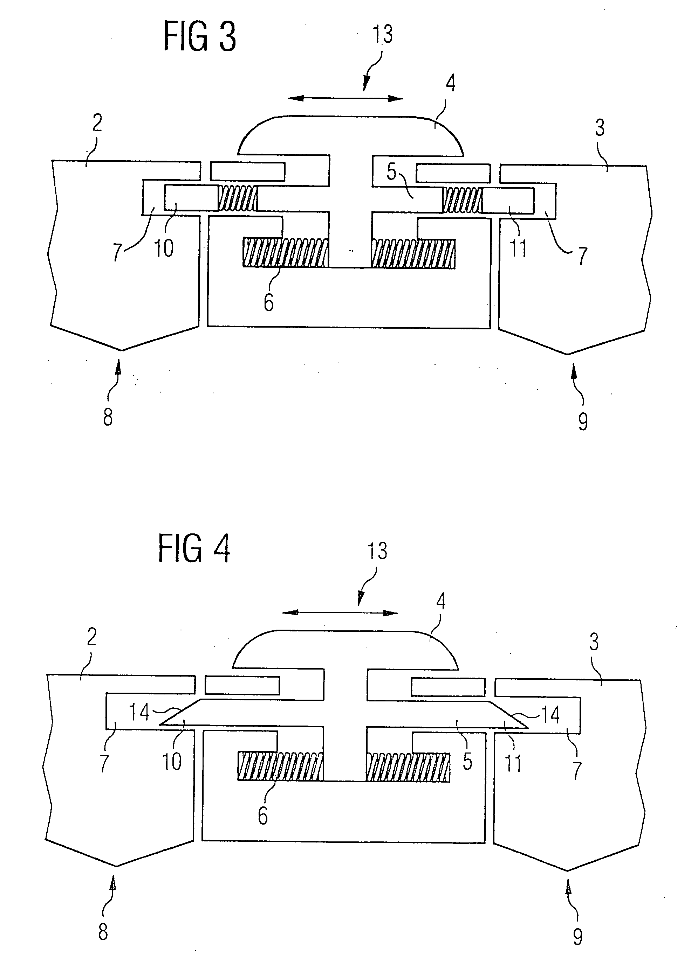

In einer Abwandlung der erfindungsgemäßen Verriegelungsvorrichtung gemäß Figur 3 ist der Schieber nicht starr, sondern die Endabschnitte sind federnd mit dem mittleren Teil des Schiebers verbunden. In dieser Ausgestaltung ist es nicht notwendig, daß die Ausnehmungen in den Einschubmodulen 2 und 3 tiefer sind als die Eindringtiefe der Endabschnitte 10 und 11 des Schiebers 5 im Ausführungsbeispiel von Figur 2. Beim Einführen der Einschubmodule 2 oder 3 werden die federnden Endabschnitte zurückgedrückt. Sobald die endgültige Einschubposition erreicht ist, entspannen sich die federnden Endabschnitte und das Einschubmodul 2 bzw. 3 ist verriegelt. Der Vorteil einer solchen Ausführung liegt darin, daß die Ausnehmungen 7 in den Einschubmodulen 2 und 3 nicht so tief ausgestaltet werden müssen.

Die Erfindung ist aber nicht auf die beschriebenen Ausführungsbeispiele beschränkt. So sind. auch Anordnungen denkbar, in denen eine Bewegung des Betätigungsknopfes nicht von dem zu entriegelnden Modul weg, sondern zu diesem hin ausgeführt werden muß. Der Betägungsknopf kann auch an einer anderen Gehäuseseite vorgesehen werden. Statt des Schiebers könnte auch eine Hebelmechanik eingesetzt werden. Eine Vielzahl von weiteren Möglicheiten liegt im Rahmen des fachmännischen Könnens.

In einer abgewandelten Ausführung, die in Figur 4 dargestellt ist, sind nicht die Einschubmodule 2 und 3 mit einer Anschrägung versehen, sondern die Endabschnitte 10 und 11. Beim Einschieben eines Einschubmoduls 2 oder 3, das in dieser Ausführung der Erfindung keine Anschrägung aufweisen muß, kommt dieses zuerst mit der Anschrägung 14 des jeweiligen Endabschnitts des Schiebers 5 in Kontakt. Durch das weitere Ausüben einer Kraft in Einsteckrichtung wird der Schieber 5 auch in dieser Abwandlung zurückgeschoben, so daß das Einsteckmodul 2 oder 3 vollständig in den Einschubplatz 8 oder 9 eingeführt werden kann.

Eine Anschrägung der Endabschnitte des Schiebers kann selbstverständlich auch auf die Ausführung gemäß Figur 3 angewandt werden. Weiterhin ist möglich, sowohl den Schieber als auch die Einschubmodule mit einer Anschrägung zu versehen.

### Bezugszeichenliste

- 1: Gehäuse
- 2: erstes Einschubmodul
- 3: zweites Einschubmodul
- 4: Betätiger
- 5: Schieber
- 6: Feder
- 7: Ausnehmung
- 8: erster Einschubplatz
- 9: zweiter Einschubplatz
- 10: Endabschnitt
- 11: Endabschnitt
- 12: Anschrägung
- 13: Verriegelungsvorrichtung
- 14: Anschrägung

## Patentansprüche

1. Tragbarer Computer mit
einem Gehäuse (1) mit zwei nebeneinander angeordneten Einschubplätzen (8, 9) zur Aufnahme von jeweils einem Einschubmodul (2, 3), wobei die Einschubmodule (2, 3) mittels einer Verriegelung in einer Einschubposition gehalten werden können und zur Entnahme der Einschubmodule (2, 3) die Verriegelung lösbar ist,
**dadurch gekennzeichnet, daß**
eine Verriegelungsvorrichtung (13) vorgesehen, die zur Verriegelung auf beider Einschubplätze (8, 9) einwirkt und die zur Entriegelung durch einen gemeinsamen Betätiger (4) auf den einen oder den anderen Einschubplatz (8, 9) einwirken kann.

2. Tragbarer Computer nach Anspruch 1,
**dadurch gekennzeichnet, daß**
die Verriegelungsvorrichtung (13) einen senkrecht zur Einschubrichtung beweglichen Schieber (5) aufweist, dessen Ruhelage durch eine Rückstellvorrichtung (6) in einer mittigen Position festgelegt ist, wobei äußere Endabschnitte (10, 11) des Schiebers (5) jeweils in einen Einschubplatz (8, 9) hineinragen und zur Verrastung jeweils in eine Ausnehmung (7) eines Einschubmoduls (2, 3) eingreifen, wobei die Ausnehmungen (7) mindestens doppelt so tief sind wie die Länge der in der Ruhelage in die Ausnehmung (7) eingreifenden Endabschnitte (10, 11) des Schiebers (5).

3. Tragbarer Computer nach Anspruch 1,
**dadurch gekennzeichnet, daß**
die Verriegelungsvorrichtung (13) einen senkrecht zur Einschubrichtung beweglichen Schieber (5) aufweist, dessen Ruhelage durch eine Rückstellvorrichtung (6) in einer mittigen Position festgelegt ist, wobei äußere Endabschnitte (10, 11) des Schiebers (5) jeweils in einen Einschubplatz (8, 9) hineinragen und zur Verrastung jeweils in eine Ausnehmung (7) eines Einschubmoduls (2, 3) eingreifen, wobei die Endabschnitte (10, 11) federnd mit einem mittleren Abschnitt des Schiebers verbunden sind.

4. Tragbarer Computer nach Anspruch 2 oder 3,
**dadurch gekennzeichnet, daß**
der Schieber (5) mit einem außerhalb des Gehäuses angeordneten Knopf verbunden ist, durch den der Schieber (5) betätigbar ist.
